(19) Europäisches Patentamt
European Patent Office
Office européen des brevets

(11) **EP 3 852 034 A1**

(12) **EUROPEAN PATENT APPLICATION**

(43) Date of publication:
**21.07.2021 Bulletin 2021/29**

(51) Int Cl.:
***G06Q 10/06*** *(2012.01)*

(21) Application number: **20214571.0**

(22) Date of filing: **16.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **16.01.2020 JP 2020005088**

(71) Applicant: **FUJITSU LIMITED**
**Kanagawa 211-8588 (JP)**

(72) Inventors:
• **Tsunoda, Tadanobu**
  **Kanagawa, 211-8588 (JP)**
• **Uno, Kazuya**
  **Kanagawa, 211-8588 (JP)**
• **Yamamoto, Dai**
  **Kanagawa, 211-8588 (JP)**

(74) Representative: **Hoffmann Eitle**
**Patent- und Rechtsanwälte PartmbB**
**Arabellastraße 30**
**81925 München (DE)**

(54) **GENERATION METHOD, INFORMATION PROCESSING APPARATUS, AND GENERATION PROGRAM**

(57) A generation method implemented by a computer, the method includes: calculating a degree of similarity between a business entity being evaluated and a counterparty business entity that has a business relationship with the business entity being evaluated; and generating information on a degree of trust in the business entity being evaluated, based on the calculated degree of similarity.

FIG. 1

## Description

FIELD

The embodiment discussed herein is related to a generation method, an information processing apparatus, and a generation program.

BACKGROUND

With the progress of information and communications technology (ICT), it is expected that transactions between business entities, which have been hitherto performed as face-to-face ones, are performed as non-face-to-face ones over the Internet.

In non-face-to-face transactions, a business entity is unable to directly recognize the counterparty, thus causing a problem: how the business entity can trust the counterparty. Information from the website of the counterparty on the Internet is not enough for establishing a trust relationship between the business entities.

If the counterparty has a business relationship with another business entity, analysis of the relationship allows the business entity to grasp the degree of trust in the counterparty viewed from the other business entity. Conceivably, the business entity may trust the counterparty by replacing the degree of trust in the counterparty viewed from the other business entity with that of the business entity.

Since information on business entities such as business relationships is stored in various applications and services in a distributed manner, it is not easy to grasp the information at once. Accordingly, in order to make it possible to easily grasp the degree of trust in a business entity from information on business relationships between business entities, these pieces of information on the business entities are expectedly integrated and provided in an easy-to-view form for a user.

For example, in Japanese Laid-open Patent Publication No. 2015-026388, a mechanism is provided in which attribute information such as a name and a location of each business entity and business relationship information including customer business entities, supplier business entities, and transaction-target items of the business entity are associated with unique business entity information, and links between the business entities are displayed as business entity map information having a graph structure.

In International Publication Pamphlet No. WO 2016/021522, transaction information between business entities and links between business entities obtained through a keyword search on websites of business entities or the like are converted into a directed graph, and the degrees of importance as suppliers of a procurement article are determined based on the number of counterparty business entities and the number of transaction documents.

In Japanese Laid-open Patent Publication No. 2019-057068, a complementary relationship between organizations is analyzed based on an issue and technical information of the organizations such as individual business entities collected from public technical documents, and cooperation between the organizations is supported.

SUMMARY

[TECHNICAL PROBLEM]

However, with the techniques described above, links between business entities and the number of links may be grasped but it is difficult to grasp whether the business entities are linked to each other really with trust in the capabilities of the counterparties. For example, links between business entities in a business entity map having a graph structure merely indicate the fact that there are transactions between the business entities and does not necessarily indicate that the business entities are linked to each other with trust in the capabilities of the counterparties. For example, links to other business entities linked to a business entity being evaluated and the number of links fail to directly indicate trust in the capabilities of the business entity being evaluated.

According to an aspect of the embodiments, provided is a solution to improve the accuracy of information on the degree of trust in a counterparty.

[SOLUTION TO PROBLEM]

According to an aspect of the embodiments, a generation method implemented by a computer, the method includes: calculating a degree of similarity between a business entity being evaluated and a counterparty business entity that has a business relationship with the business entity being evaluated; and generating information on a degree of trust in the business entity being evaluated, based on the calculated degree of similarity.

[ADVANTAGEOUS EFFECTS OF INVENTION]

According to one aspect, the accuracy of information on the degree of trust in a counterparty may be improved.

BRIEF DESCRIPTION OF DRAWINGS

FIG. 1 is a block diagram schematically illustrating an example of a hardware configuration of an information processing apparatus according to an example of an embodiment;
FIG. 2 is a block diagram schematically illustrating an example of a functional configuration of the information processing apparatus illustrated in FIG. 1;
FIG. 3 describes a process of generating link information performed in the information processing apparatus illustrated in FIG. 1;

FIG. 4 illustrates a tree structure based on the international patent classification (IPC);

FIG. 5 describes a process of generating a competency tree performed in the information processing apparatus illustrated in FIG. 1;

FIG. 6 describes a process of calculating a degree of similarity performed in the information processing apparatus illustrated in FIG. 1;

FIG. 7 describes a process of calculating a degree of trust reliability performed in the information processing apparatus illustrated in FIG. 1;

FIG. 8 illustrates a first example of a display screen of the degree of trust reliability for a business entity being evaluated displayed by the information processing apparatus illustrated in FIG. 1;

FIG. 9 illustrates a second example of the display screen of the degree of trust reliability for the business entity being evaluated displayed by the information processing apparatus illustrated in FIG. 1;

FIG. 10 illustrates a display screen of a distribution graph of the degrees of trust reliabilities for a plurality of business entities displayed by the information processing apparatus illustrated in FIG. 1;

FIG. 11 describes details of the process of generating a competency tree performed in the information processing apparatus illustrated in FIG. 1;

FIG. 12 describes the details of the process of generating a competency tree performed in the information processing apparatus illustrated in FIG. 1;

FIG. 13 describes details of the process of calculating a degree of similarity performed in the information processing apparatus illustrated in FIG. 1;

FIG. 14 describes the details of the process of calculating a degree of similarity performed in the information processing apparatus illustrated in FIG. 1; and

FIG. 15 is a flowchart describing the process of calculating a degree of trust reliability performed in the information processing apparatus illustrated in FIG. 1.

## DESCRIPTION OF EMBODIMENT(S)

An embodiment will be described below with reference to the drawings. The following embodiment is merely illustrative and is in no way intended to exclude various modifications or technical applications that are not explicitly described in the embodiment. For example, the present embodiment may be carried out in various modified forms without departing from the gist thereof.

Each figure is not intended to include only the elements illustrated therein, and thus may include other functions and the like.

Since the same reference signs denote the same or similar components in the drawings, the description of such components is omitted.

[A] Example of Embodiment

[A-1] Example of System Configuration

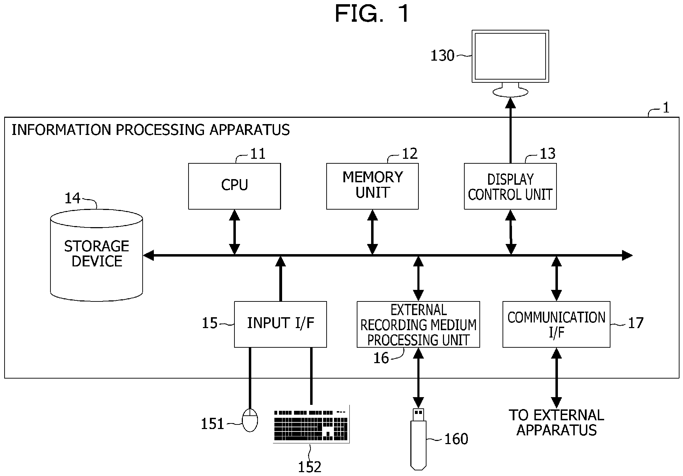

FIG. 1 is a block diagram schematically illustrating an example of a hardware configuration of an information processing apparatus 1 according to an example of an embodiment.

As illustrated in FIG. 1, the information processing apparatus 1 includes a central processing unit (CPU) 11, a memory unit 12, a display control unit 13, a storage device 14, an input interface (I/F) 15, an external recording medium processing unit 16, and a communication I/F 17.

The memory unit 12 is an example of a storage and includes, for example, a read-only memory (ROM), a random-access memory (RAM), and so on. Programs such as a basic input/output system (BIOS) may be written in the ROM of the memory unit 12. The software programs stored in the memory unit 12 may be appropriately loaded and executed by the CPU 11. The RAM of the memory unit 12 may be utilized as a memory for temporary storage or as a working memory.

The display control unit 13 is coupled to a display device 130 and controls the display device 130. The display device 130 is a liquid crystal display, an organic light-emitting diode (OLED) display, a cathode ray tube (CRT) display, an electronic paper display, or the like and displays various types of information for an operator or the like. The display device 130 may be combined with an input device. For example, the display device 130 may be a touch panel.

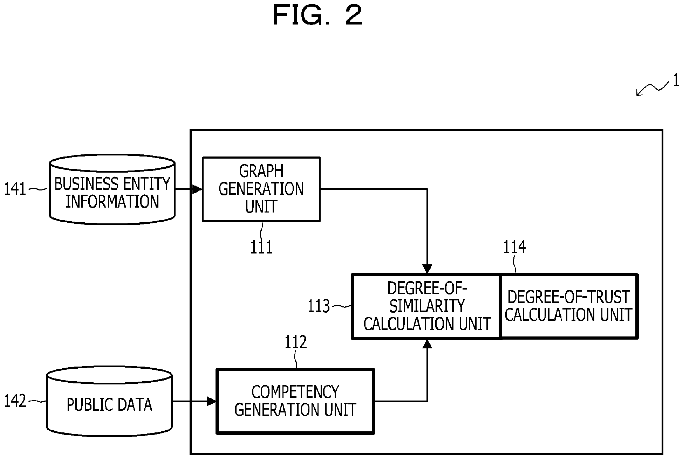

The storage device 14 is a storage device having high input/output performance. For example, a hard disk drive (HDD), a solid state drive (SSD), or a storage class memory (SCM) may be used as the storage device 14. The storage device 14 may store business entity information 141 and public data 142, which will be described later using FIG. 2.

The input I/F 15 may be coupled to input devices such as a mouse 151 and a keyboard 152 and may control the input devices such as the mouse 151 and the keyboard 152. Each of the mouse 151 and the keyboard 152 is an example of an input device. The operator performs various input operations using these input devices.

The external recording medium processing unit 16 is configured so that a recording medium 160 may be inserted thereto. The external recording medium processing unit 16 is configured to be able to read information recorded on the recording medium 160 in a state in which the recording medium 160 is inserted thereto. In the present example, the recording medium 160 is portable. For example, the recording medium 160 is a flexible disk, an optical disc, a magnetic disk, a magneto-optical disk, a semiconductor memory, or the like.

The communication I/F 17 is an interface that enables communication with an external apparatus.

The CPU 11 is a processing device that performs various kinds of control and various computations. The CPU 11 executes an operating system (OS) and the programs stored in the memory unit 12 to implement various functions.

The device that controls the operations of the entire information processing apparatus 1 is not limited to the CPU 11 and may be any one of an MPU, a DSP, an ASIC, a PLD, or an FPGA, for example. The device that controls the operations of the entire information processing apparatus 1 may be a combination of two or more kinds of a CPU, an MPU, a DSP, an ASIC, a PLD, or an FPGA. The MPU is an abbreviation of microprocessing unit. The DSP is an abbreviation of digital signal processor. The ASIC is an abbreviation of application-specific integrated circuit. The PLD is an abbreviation of programmable logic device. The FPGA is an abbreviation of field-programmable gate array.

FIG. 2 is a block diagram schematically illustrating an example of a functional configuration of the information processing apparatus 1 illustrated in FIG. 1.

As illustrated in FIG. 2, the information processing apparatus 1 functions as a graph generation unit 111, a competency generation unit 112, a degree-of-similarity calculation unit 113, and a degree-of-trust calculation unit 114.

The graph generation unit 111 generates a graph representing links between business entities, based on the business entity information 141. For example, the graph generation unit 111 integrates content included in the business entity information 141 and internally expresses links between business entities in a graph structure. The graph generation unit 111 summarizes, for each business entity, with which business entities the business entity has a business relationship, and extracts one or more other business entities having a business relationship with a business entity being evaluated by using, as a key, the name of the business entity being evaluated.

The business entity information 141 includes transaction situations between business entities. For example, the business entity information 141 may be deposit/withdrawal histories of bank accounts managed by financial institutions or account book information on blockchains related to transactions between the business entities. The business entity information 141 may be extracted from a website.

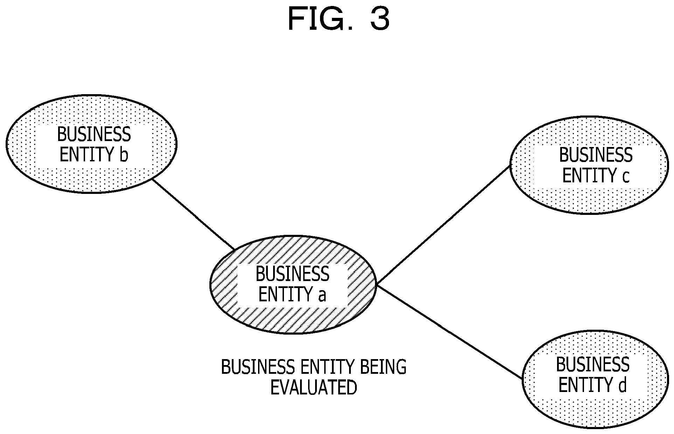

Details of a process performed by the graph generation unit 111 will be described later using FIG. 3 and so on.

The competency generation unit 112 generates a competency tree, based on the public data 142. For example, the competency generation unit 112 extracts competency information as structured data according to a predefined tree-like schema definition, by using the public data 142 on the competency of a business entity.

The public data 142 is information on capabilities (in other words, competency) of each business entity, and is information acquirable by anyone. The public data 142 may be, for example, content of patent applications, design registration applications, or trademark registration applications that have been filed by the business entity being evaluated and are on the web. For example, the public data 142 may be classification information such as the IPC, the FI term, and the F term of patent applications. The public data 142 may also be the design classification of design registration applications, or may be classification or the similar group code of products and services of trademark registration applications.

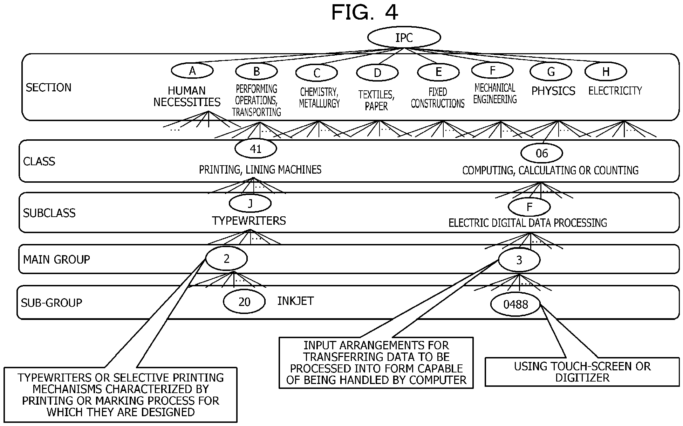

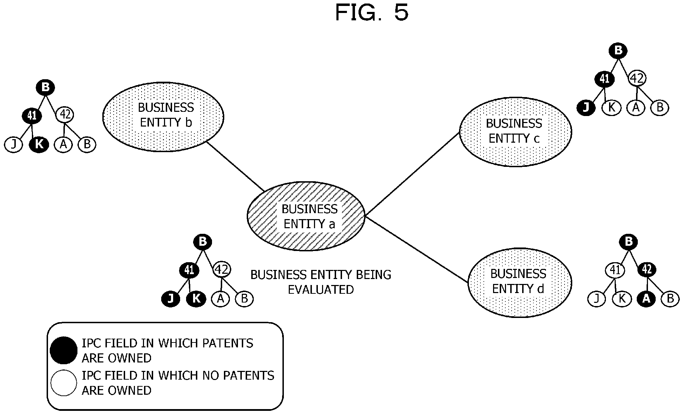

Details of a process performed by the competency generation unit 112 will be described later using FIGs. 4, 5, and so on.

The degree-of-similarity calculation unit 113 calculates a degree of similarity between competency trees of individual business entities. For example, the degree-of-similarity calculation unit 113 compares, for the business entity being evaluated and each business entity linked to the business entity being evaluated, pieces of competency information generated by the competency generation unit 112 and structured in a tree form, and calculates how similar their competencies are.

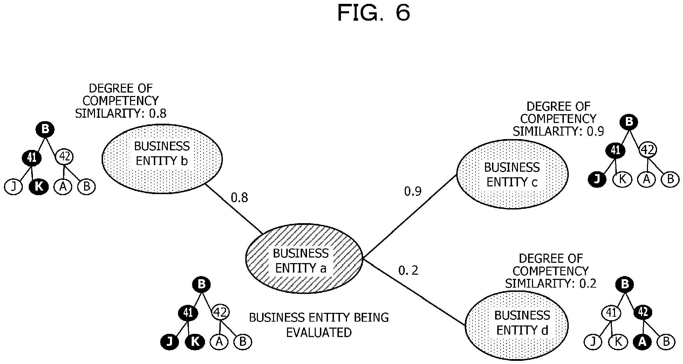

The details of a process performed by the degree-of-similarity calculation unit 113 will be described later using FIG. 6 and the like.

The degree-of-trust calculation unit 114 calculates a degree of trust reliability for the business entity being evaluated, based on the degrees of similarity between the business entity being evaluated and individual counterparties. For example, the degree-of-trust calculation unit 114 fuses the degrees of similarity between the business entity being evaluated and all the business entities linked to the business entity being evaluated, which are calculated by the degree-of-similarity calculation unit 113, to calculate the degree of trust reliability for the capabilities of the business entity being evaluated.

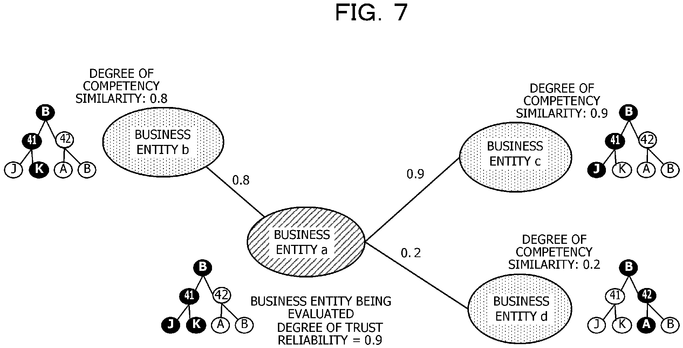

Details of a process performed by the degree-of-trust calculation unit 114 will be described later using FIG. 7 and so on.

FIG. 3 describes a process of generating link information performed in the information processing apparatus 1 illustrated in FIG. 1.

The graph generation unit 111 generates a graph in which a business entity having a link to, such as a business relationship with, a business entity a, which is a business entity being evaluated, is linked to the business entity a. In the example illustrated in FIG. 3, the graph generation unit 111 extracts business entities b to d as business entities having a link to the business entity a, and generates a graph in which the business entity a and the business entities b to d are linked to each other.

FIG. 4 illustrates a tree structure based on the IPC. FIG. 5 describes a process of generating a competency tree performed in the information processing apparatus 1 illustrated in FIG. 1.

For example, the competency generation unit 112 extracts, as competency information of a business entity, IPC information from the contents in acquired patent applications. For example, the competency generation unit 112 extracts the fields of technology which each business entity has, from the IPC classification of patents.

FIG. 5 illustrates that in which part of the IPC tree structure illustrated in FIG. 4 each of the business entity a, which is the business entity being evaluated, and the business entities b to d having a link to the business entity a owns patents.

In the example illustrated in FIG. 5, the business entity a owns patents indicated by "B41J" and "B41K", and the business entity b owns patents indicated by "B41K" in the IPC classification illustrated in FIG. 4. The business entity c owns patents indicated by "B41J", and the business entity d owns patents indicated by "B42A".

FIG. 6 describes a process of calculating a degree of similarity performed in the information processing apparatus 1 illustrated in FIG. 1.

For example, the degree-of-similarity calculation unit 113 may calculate the degree of similarity from ratios of the numbers of nodes included in the trees of the competency information of the linked business entity to the numbers of respective nodes included in the trees of the competency information of the business entity being evaluated.

There may be a case where a business entity have obtained a plurality of patents or a case where, if a plurality of IPC classification categories are assigned to patents owned by a business entity, a percentage of each IPC field is determined as a calculation result from all the patents owned by the business entity. In such a case, the degree-of-similarity calculation unit 113 may calculate the degree of similarity, based on the ratio of the number of nodes occupied by the IPC field of the owned patents.

In the example illustrated in FIG. 6, the degrees of similarity of the business entities b, c, and d to the business entity a, which is the business entity being evaluated, are 0.8, 0.9, and 0.2, respectively. The degree of similarity may be represented by a value that is greater than or equal to 0 and less than or equal to 1, for example.

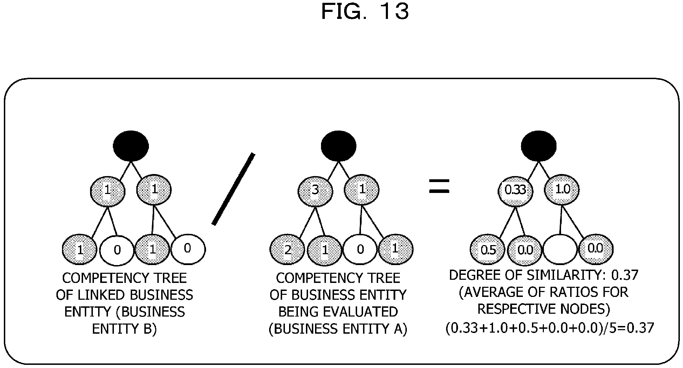

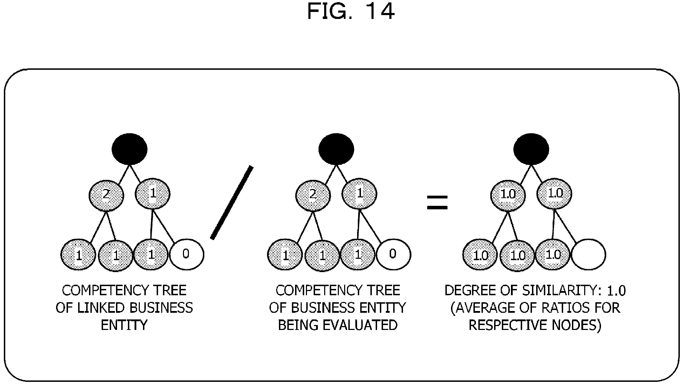

The details of the process of calculating the degree of similarity will be described later using FIGs. 13, 14, and so on.

FIG. 7 describes a process of calculating a degree of trust reliability performed in the information processing apparatus 1 illustrated in FIG. 1.

The degree-of-trust calculation unit 114 may calculate the degree of trust reliability by averaging the degrees of similarity for the respective links. The degree-of-trust calculation unit 114 may calculate the degree of trust reliability by determining a root mean square of the degrees of similarity for the respective links. The degree-of-trust calculation unit 114 may use, in calculation of the degree of trust reliability, a fusion operation of subjective logic (A. Josang, "Artificial Reasoning with Subjective Logic", Proceedings of the Second Australian Workshop on Commonsense Reasoning, 1997), which enables quantitative handling of the subjective concept of trust.

In the example illustrated in FIG. 7, the degree of trust reliability for the business entity a, which is the business entity being evaluated, is 0.9. The degree of trust reliability may be represented by a value that is greater than or equal to 0 and less than or equal to 1, for example.

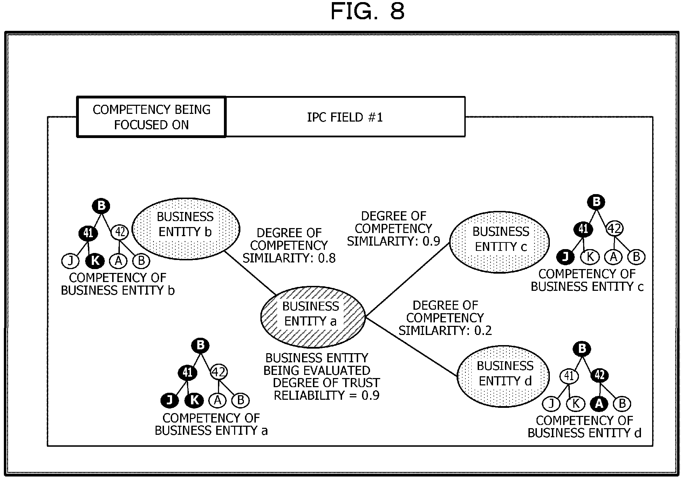

FIG. 8 illustrates a first example of a display screen of the degree of trust reliability for the business entity being evaluated displayed by the information processing apparatus 1 illustrated in FIG. 1.

In the display screen illustrated in FIG. 8, in addition to the map containing links between business entities, the competency trees of the respective business entities, the degrees of similarity in competency, and the degree of trust reliability for the business entity being evaluated are depicted in a graphical user interface (GUI).

In the example illustrated in FIG. 8, a value "IPC FIELD #1" is input as the competency being focused on. Thus, the degree of similarity to the business entity being evaluated is calculated only for business entities that own patents of the IPC field #1. The degree of trust reliability for the business entity being evaluated is then displayed.

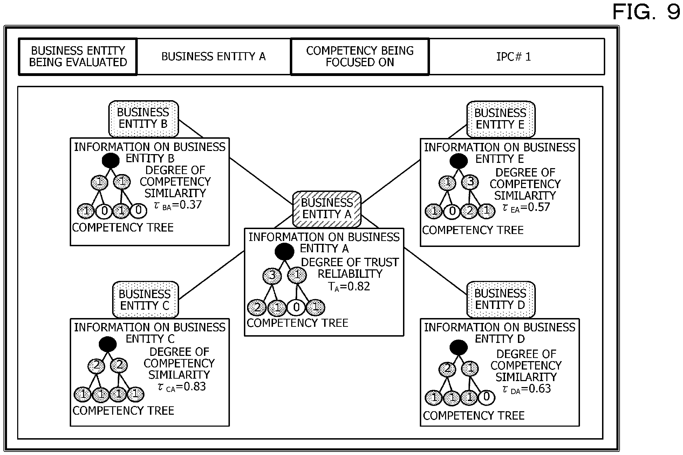

FIG. 9 illustrates a second example of the display screen of the degree of trust reliability for the business entity being evaluated displayed by the information processing apparatus 1 illustrated in FIG. 1.

In the example illustrated in FIG. 9, a business entity being evaluated is selectable in addition to the item described in the example illustrated in FIG. 8. In the illustrated example, "BUSINESS ENTITY A" is input as the business entity being evaluated, and "IPC FIELD #1" is input as the competency being focused on. Consequently, the degree of trust reliability for the business entity A and the degrees of similarity, to the competency of the business entity A, of the competencies of the business entities B to E that have a link to the business entity A and own patents of the IPC field #1 are displayed.

The display screens illustrated in FIGs. 8 and 9 allow the degree of trust reliability to be checked in terms of the capabilities of the business entity being evaluated with respect to the competency being focused on. This may be useful to grasp the trust in the capabilities of a business entity that is a counterparty or a counterparty candidate and to perform transactions.

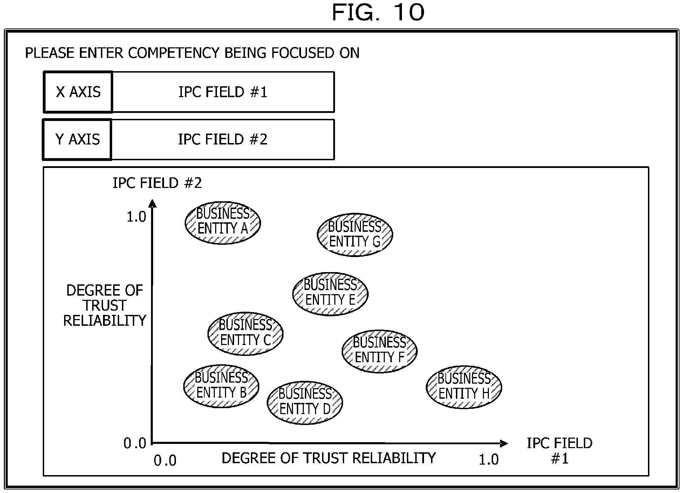

FIG. 10 illustrates a display screen of a distribution graph of the degrees of trust reliability for a plurality of business entities displayed by the information processing apparatus 1 illustrated in FIG. 1.

In the display screen illustrated in FIG. 10, results obtained by calculating, based on all the acquired business entity information 141, the degrees of trust reliability for individual business entities while the business entities are each regarded as the business entity being evaluated are mapped onto two-dimensional coordinates.

In the example illustrated in FIG. 10, as the competency being focused on, "IPC FIELD #1" is designated for the X axis coordinate, and "IPC FIELD #2" is designated for the Y axis coordinate. Consequently, the degrees of trust reliability for the business entities that own patents of the IPC field #1 and the IPC field #2 are mapped onto the two-dimensional coordinates.

The display screen illustrated in FIG. 10 may be useful in comparison and inspection performed when a counterparty is selected from among a plurality of counterparty candidates with emphasis on the capabilities of the counterparty business entity.

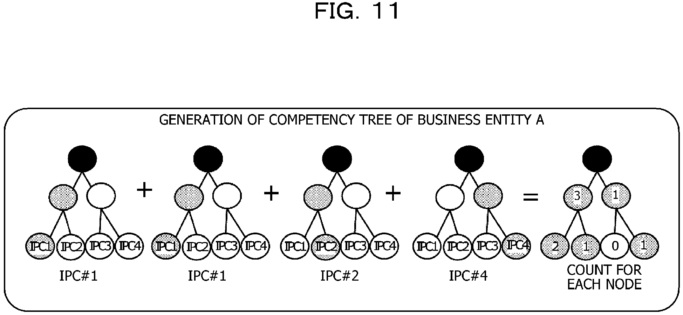

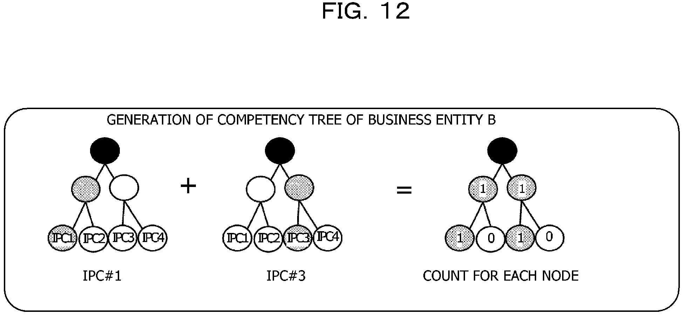

FIGs. 11 and 12 describe the details of the process of generating a competency tree performed in the information processing apparatus 1 illustrated in FIG. 1.

The competency generation unit 112 adds up the number of corresponding nodes existing in the structured data on the trees and holds, as a competency tree, the count excluding the root node of the tree.

In the example illustrated in FIG. 11, the business entity A owns two patents of the IPC #1, one patent of the IPC #2, and one patent of the IPC #4. In the example illustrated in FIG. 12, the business entity B owns one patent of the IPC #1 and one patent of the IPC #3.

FIGs. 13 and 14 describe the details of the process of calculating the degree of similarity performed in the information processing apparatus 1 illustrated in FIG. 1.

The degree-of-similarity calculation unit 113 may calculate ratios of the counts in every node of the competency tree of the linked business entity to the counts in every corresponding node of the competency tree of the business entity being evaluated. The degree-of-similarity calculation unit 113 may define, as the degree of similarity, an average of the ratios calculated for the individual nodes.

In the example illustrated in FIG. 13, the ratios are calculated by dividing the counts for each node in the competency tree of the linked business entity by the counts for each corresponding node in the competency tree of the business entity being evaluated. The calculated ratios are added up, and the sum of the calculated ratios is divided by the number of nodes having a count that is greater than or equal to 1 in the competency tree of the business entity being evaluated. For example, the calculation of the degree of similarity is as follows; (1/3 + 1/1 + 1/2 + 0/1 + 0/1)/5 = (0.33 + 1.0 + 0.5 + 0.0 + 0.0)/5 = 0.37.

In the example illustrated in FIG. 14, all the counts of the nodes in the competency tree of the business entity being evaluated are equal to those in the competency tree of the linked business entity. Thus, the degree of similarity is 1.

A general formula of calculating the degree of similarity based on the average is determined as follows.

First, a number is assigned to each node of the tree constituting the competency schema, and a set of the numbers is denoted as $I = \{1\ 2\ 3\ 4, ..., n\}$. In the set I, the set of the numbers of the competency schema, sets of the numbers assigned to the nodes that are not empty in the competency trees of the respective business entities (for example, the business entity A and the business entity B) are denoted as $I_A$ and $I_B$ ($I_A \subset I$, $I_B \subset I$), respectively. The numbers of elements in the respective sets are denoted as $n_a$ and $n_b$. The counts of the node number i in the competency trees of the business entity A and the business entity B are respectively denoted as $S_i^A$, $S_i^B$

The ratio of the count of the node number $i \in I_A$ for the business entity B to the count of the corresponding node for the business entity A is as follows.

$$q_i^{B|A} = \begin{cases} \dfrac{S_i^B}{S_i^A} & (S_i^B < S_i^A) \\ 1.0 & (S_i^B \geq S_i^A) \end{cases}$$

The degree of similarity of the business entity B to the business entity A is denoted as $\tau_{B|A}$. The degree of similarity is calculated as follows by determining an average of the ratios for the individual nodes.

$$\tau_{B|A} = \frac{1}{n_A} \sum_{i \in I_A} q_i^{B|A}$$

The degree-of-trust calculation unit 114 may calculate the degree of trust reliability based on the root mean square using a general formula described below.

It is assumed that the business entity being evaluated is the business entity A, and that the business entity A has a business relationship with N business entities and are linked to the N business entities. The degree of similarity of the business entity $C_j$ to the business entity A is denoted as $\tau_{Cj|A}$. The degree of trust reliability $T_A$ for the business entity A is determined as follows.

$$T_A = \sqrt{\frac{1}{N} \sum_{j=1}^{N} (\tau_{Cj|A})^2}$$

The degree-of-trust calculation unit 114 may calculate the degree of trust reliability based on the subjective logic using a general formula described below.

Trust is expressed using three parameters of b (belief), d (disbelief), and u (uncertainty). These three parameters satisfy a condition of b + d + u = 1.

In the subjective logic, the trust of the counterparty is expressed in a beta distribution. In the beta distribution, p is a value indicating a probability in a range from 0 to 1 and positive real numbers $\alpha$ and $\beta$ are given.

A probability density function Beta(p, $\alpha$, $\beta$) of p and an expectation value $E_p$ thereof may be expressed as follows. Note that $\Gamma(x)$ represents a gamma function.

$$\text{Beta}(p, \alpha, \beta) = \frac{\Gamma(\alpha + \beta)}{\Gamma(\alpha)\Gamma(\beta)} p^{\alpha-1}(1-p)^{\beta-1}$$

$$E_p = \alpha/(\alpha + \beta)$$

In the subjective logic, p in the beta distribution is considered as the ratio of positive opinions on the counterparty (for example, the ratio of trusting the counterparty). Thus, $\alpha$ and $\beta$ are set as follows.

$$\begin{cases} \alpha = \dfrac{2b}{u} + 1 \\ \beta = \dfrac{2d}{u} + 1 \end{cases}$$

Thus, the expectation value of the trust p in the subjective logic is denoted as $E_p = (2b+u)/2$.

Suppose that there are two sets of trust information for an evaluation target X. Let $b_X^1$, $b_X^2$ denote belief, and let $u_X^1$, $u_X^2$ denote uncertainty.

In a fusion operation called averaging fusion in the subjective logic, let $b_X^{1\lozenge 2}$, $u_X^{1\lozenge 2}$ (where $\lozenge$ denotes an operator of the fusion operation) denote the fusion values of belief and uncertainty. Then, the fusion values are calculated as follows.

$$\begin{cases} b_X^{1\lozenge 2} = \dfrac{b_X^1 u_X^2 + b_X^2 u_X^1}{u_X^1 + u_X^2} \\ u_X^{1\lozenge 2} = \dfrac{2u_X^1 u_X^2}{u_X^1 + u_X^2} \end{cases}$$

The fact that there is a business relationship between business entities and the business entities have already been linked to each other is regarded that disbelief is 0 (d = 0). It is assumed that the degree of similarity $\tau$ between the competencies of the business entities is equal to belief. Thus, uncertainty is calculated as u = 1 - $\tau$ according to the condition on the parameters in the subjective logic.

It is assumed that the business entity being evaluated is the business entity A. The degree of similarity of the business entity B to the business entity A is denoted as $\tau_{B|A}$, and the degree of similarity of the business entity C to the business entity A is denoted as $\tau_{C|A}$.

From the conditions above, the fusion values of the trust in the business entity A from the business entity B and the trust in the business entity A from the business entity C are as follows.

$$\begin{cases} b_A^{B\lozenge C} = \dfrac{\tau_{B|A} + \tau_{C|A} - 2\tau_{B|A}\tau_{C|A}}{2 - \tau_{B|A} - \tau_{C|A}} \\ u_A^{B\lozenge C} = 1 - b_A^{B\lozenge C} \end{cases}$$

Next, the degree of similarity of the business entity D to the business entity A is denoted as $\tau_{D|A}$. Then, the fusion values obtained by further fusing the trust from the business entity D with the trust from the business entities B and C are as follows.

$$\begin{cases} b_A^{B\lozenge C\lozenge D} = \dfrac{b_A^{B\lozenge C} + \tau_{D|A} - 2b_A^{B\lozenge C}\tau_{D|A}}{2 - b_A^{B\lozenge C} - \tau_{D|A}} \\ u_A^{B\lozenge C\lozenge D} = 1 - b_A^{B\lozenge C\lozenge D} \end{cases}$$

Likewise, fusion is performed for business entities E, F, and so on. Consequently, the fusion values obtained for all the linked business entities are calculated as follows.

$$\begin{cases} b_A^{\lozenge *} = b_A^{B\lozenge C\lozenge D\lozenge E\lozenge F\cdots} \\ u_A^{\lozenge *} = 1 - b_A^{\lozenge *} \end{cases}$$

Then, the expectation value of the beta distribution determined from the parameter of the trust resulting from fusion is calculated as follows, where $T_A$ denotes the degree of trust reliability for the business entity A being evaluated.

$$T_A = \frac{b_A^{\lozenge *} + 1}{2}$$

[A-2] Example of Operation

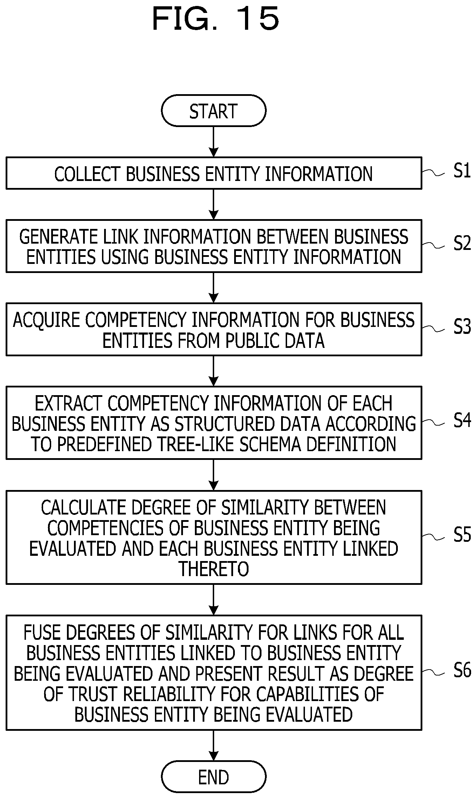

The process of calculating the degree of trust reliability performed in the information processing apparatus 1 illustrated in FIG. 1 will be described in accordance with a flowchart (steps S1 to S6) illustrated in FIG. 15.

The graph generation unit 111 collects the business entity information 141 (step S1).

The graph generation unit 111 generates the link information between business entities using the business entity information 141 (step S2).

The competency generation unit 112 acquires the competency information of the business entities from the public data 142 (step S3).

The competency generation unit 112 extracts the competency information of each business entity as structured data according to a predefined tree-like schema definition (step S4).

The degree-of-similarity calculation unit 113 calculates the degree of similarity between the competency of the business entity being evaluated and the competency of each business entity linked to the business entity being evaluated (step S5).

The degree-of-trust calculation unit 114 fuses the degrees of similarity for the links for all the business entities linked to the business entity being evaluated, and presents the result as the degree of trust reliability for the capabilities of the business entity being evaluated (step S6). Then, the process of calculating the degree of trust reliability ends.

[A-3] Effects

The degree-of-similarity calculation unit 113 calculates a degree of similarity between the business entity being evaluated and a counterparty business entity having a business relationship with the business entity being evaluated. The degree-of-trust calculation unit 114 generates information on the degree of trust in the business entity being evaluated, based on the calculated degree of similarity.

Consequently, the accuracy of information on the degree of trust in a counterparty may be improved. The degree of similarity in competency is calculated to generate the information on the degree of trust. The higher the similarity between parties, the better the position of the counterparty is understood. Thus, the effect of trusting the counterparty (salient value similarity; M. Siegrist, G. Cvetkovich, C. Roth, "Salient Value Similarity, Social Trust, and Risk/Benefit Perception", Risk Analysis, 2000) is usable. For example, how much the link is usable as reliable trust information may be indicated by the degree of similarity in competency.

The degree-of-similarity calculation unit 113 calculates the degree of similarity, based on classification of intellectual property owned by the business entity being evaluated and the counterparty business entity.

Consequently, the degree of similarity between the business entities may be calculated using public data.

The degree-of-trust calculation unit 114 generates the information on the degree of trust, based on a root mean square of the degrees of similarity between the business entity being evaluated and the individual counterparty business entities.

Consequently, the information on the degree of trust may be easily generated.

The degree-of-trust calculation unit 114 generates the information on the degree of trust by fusing the degrees of trust the individual counterparty business entities have in the business entity being evaluated.

In the case where the degree of similarity is low and the capabilities of the business entity being evaluated are not well known (uncertain), the subjective logic has a property that the degree of trusting the counterparty (belief) does not increase even if a fusion operation is performed. Due to this property, even if there are many business entities linked to the business entity being evaluated, the degree of trust reliability for the business entity being evaluated does not increase if each value of the degrees of similarity is small. Therefore, instead of the number of links to the business entity being evaluated, links with the high degrees of similarity to the capabilities of the business entity being evaluated may be used as reliable information for trust in the business entity being evaluated.

[B] Others

The technique disclosed herein is not limited to the above-described embodiment and may be variously modified and carried out without departing from the gist of the present embodiment. The configurations and processes according to the present embodiment may be selectively adopted or omitted as desired or may be combined appropriately.

In the example of the above-described embodiment, the classification of intellectual property such as patents is used to calculate the degree of similarity. However, the present embodiment is not limited to this example. For example, classification of one or more business types in which business entities perform business activities may be defined in a tree structure, and the degree of similarity may be calculated based on the classification of the business types.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

[CITATION LIST]

[PATENT LITERATURE]

Japanese Laid-open Patent Publication No. 2015-026388

International Publication Pamphlet No. WO 2016/021522

Japanese Laid-open Patent Publication No. 2019-057068

[REFERENCE SIGNS LIST]

1: information processing apparatus
11: CPU
111: graph generation unit
112: competency generation unit
113: degree-of-similarity calculation unit
114: degree-of-trust calculation unit
12: memory unit
13: display control unit
130: display device
14: storage device
141: business entity information
142: public data
15: input I/F
151: mouse
152: keyboard
16: external recording medium processing unit
160: recording medium
17: communication I/F

**Claims**

1. A generation method implemented by a computer, the method comprising:

   calculating a degree of similarity between a business entity being evaluated and a counterparty business entity that has a business relationship with the business entity being evaluated; and
   generating information on a degree of trust in the business entity being evaluated, based on the calculated degree of similarity.

2. The generation method according to claim 1, wherein
   the degree of similarity is calculated based on classification of intellectual property owned by the business entity being evaluated and the counterparty business entity.

3. The generation method according to claim 1 or 2, wherein
   the information on the degree of trust is generated based on a root mean square of the degrees of similarity between the business entity being evaluated and the individual counterparty business entities.

4. The generation method according to claim 1 or 2, wherein
   when there are individual counterparty business entities in the business entity, the information on the degree of trust is generated through fusion of degrees of trust the individual counterparty business entities have in the business entity being evaluated.

5. An information processing apparatus comprising:

   a memory; and
   a processor coupled to the memory, the processor being configured to:

   calculate a degree of similarity between a business entity being evaluated and a counterparty business entity that has a business relationship with the business entity being evaluated; and
   generate information on a degree of trust in the business entity being evaluated, based on the calculated degree of similarity.

6. A generation program comprising instructions which, when the program is executed by a computer, cause the computer to execute a process, the process comprising:

   calculating a degree of similarity between a business entity being evaluated and a counterparty business entity that has a business relationship with the business entity being evaluated; and
   generating information on a degree of trust in the business entity being evaluated, based on the calculated degree of similarity.

# FIG. 1

INFORMATION PROCESSING APPARATUS

130 ~

1

14 ~ STORAGE DEVICE

11 CPU

12 MEMORY UNIT

13 DISPLAY CONTROL UNIT

15 ~ INPUT I/F

EXTERNAL RECORDING MEDIUM PROCESSING UNIT
16 ~

COMMUNICATION I/F ~ 17

151 ~

152

160

TO EXTERNAL APPARATUS

# FIG. 2

# FIG. 3

BUSINESS
ENTITY b

BUSINESS
ENTITY c

BUSINESS
ENTITY a

BUSINESS ENTITY BEING
EVALUATED

BUSINESS
ENTITY d

# FIG. 4

| | | | | | | | | |
|---|---|---|---|---|---|---|---|---|
| SECTION | A HUMAN NECESSITIES | B PERFORMING OPERATIONS, TRANSPORTING | C CHEMISTRY, METALLURGY | D TEXTILES, PAPER | E FIXED CONSTRUCTIONS | F MECHANICAL ENGINEERING | G PHYSICS | H ELECTRICITY |

**CLASS**
41 — PRINTING, LINING MACHINES
06 — COMPUTING, CALCULATING OR COUNTING

**SUBCLASS**
J — TYPEWRITERS
F — ELECTRIC DIGITAL DATA PROCESSING

**MAIN GROUP**
2
3

**SUB-GROUP**
20 INKJET
0488

TYPEWRITERS OR SELECTIVE PRINTING MECHANISMS CHARACTERIZED BY PRINTING OR MARKING PROCESS FOR WHICH THEY ARE DESIGNED

INPUT ARRANGEMENTS FOR TRANSFERRING DATA TO BE PROCESSED INTO FORM CAPABLE OF BEING HANDLED BY COMPUTER

USING TOUCH-SCREEN OR DIGITIZER

FIG. 5

BUSINESS
ENTITY b

BUSINESS
ENTITY a

BUSINESS ENTITY BEING
EVALUATED

BUSINESS
ENTITY c

BUSINESS
ENTITY d

IPC FIELD IN WHICH PATENTS
ARE OWNED

IPC FIELD IN WHICH NO PATENTS
ARE OWNED

FIG. 6

DEGREE OF
COMPETENCY
SIMILARITY: 0.8

BUSINESS
ENTITY b

DEGREE OF
COMPETENCY
SIMILARITY: 0.9

BUSINESS
ENTITY c

0.8

0.9

BUSINESS
ENTITY a

BUSINESS ENTITY BEING
EVALUATED

0.2

DEGREE OF
COMPETENCY
SIMILARITY: 0.2

BUSINESS
ENTITY d

FIG. 7

DEGREE OF
COMPETENCY
SIMILARITY: 0.8

BUSINESS
ENTITY b

0.8

DEGREE OF
COMPETENCY
SIMILARITY: 0.9

BUSINESS
ENTITY c

0.9

BUSINESS
ENTITY a

0.2

BUSINESS ENTITY BEING
EVALUATED
DEGREE OF TRUST
RELIABILITY = 0.9

DEGREE OF
COMPETENCY
SIMILARITY: 0.2

BUSINESS
ENTITY d

## FIG. 8

| COMPETENCY BEING FOCUSED ON | IPC FIELD #1 |
| --- | --- |

BUSINESS ENTITY b

COMPETENCY OF BUSINESS ENTITY b

DEGREE OF COMPETENCY SIMILARITY: 0.8

DEGREE OF COMPETENCY SIMILARITY: 0.9

BUSINESS ENTITY c

COMPETENCY OF BUSINESS ENTITY c

BUSINESS ENTITY a

BUSINESS ENTITY BEING EVALUATED DEGREE OF TRUST RELIABILITY = 0.9

DEGREE OF COMPETENCY SIMILARITY: 0.2

BUSINESS ENTITY d

COMPETENCY OF BUSINESS ENTITY a

COMPETENCY OF BUSINESS ENTITY d

FIG. 9

| BUSINESS ENTITY BEING EVALUATED | BUSINESS ENTITY A | COMPETENCY BEING FOCUSED ON | IPC# 1 |
|---|---|---|---|

# FIG. 10

PLEASE ENTER COMPETENCY BEING FOCUSED ON

| X AXIS | IPC FIELD #1 |
|---|---|

| Y AXIS | IPC FIELD #2 |
|---|---|

IPC FIELD #2

DEGREE OF TRUST RELIABILITY

1.0

BUSINESS ENTITY A

BUSINESS ENTITY G

BUSINESS ENTITY E

BUSINESS ENTITY C

BUSINESS ENTITY F

BUSINESS ENTITY B

BUSINESS ENTITY D

BUSINESS ENTITY H

0.0

0.0          DEGREE OF TRUST RELIABILITY          1.0          IPC FIELD #1

# FIG. 11

GENERATION OF COMPETENCY TREE OF BUSINESS ENTITY A

# FIG. 12

GENERATION OF COMPETENCY TREE OF BUSINESS ENTITY B

IPC#1 + IPC#3 = COUNT FOR EACH NODE

FIG. 13

COMPETENCY TREE
OF LINKED BUSINESS
ENTITY (BUSINESS
ENTITY B)

COMPETENCY TREE
OF BUSINESS ENTITY
BEING EVALUATED
(BUSINESS ENTITY A)

DEGREE OF SIMILARITY: 0.37
(AVERAGE OF RATIOS FOR
RESPECTIVE NODES)
(0.33+1.0+0.5+0.0+0.0)/5=0.37

FIG. 14

COMPETENCY TREE
OF LINKED BUSINESS
ENTITY

COMPETENCY TREE
OF BUSINESS ENTITY
BEING EVALUATED

DEGREE OF SIMILARITY: 1.0
(AVERAGE OF RATIOS FOR
RESPECTIVE NODES)

# FIG. 15

START

COLLECT BUSINESS ENTITY INFORMATION — S1

GENERATE LINK INFORMATION BETWEEN BUSINESS ENTITIES USING BUSINESS ENTITY INFORMATION — S2

ACQUIRE COMPETENCY INFORMATION FOR BUSINESS ENTITIES FROM PUBLIC DATA — S3

EXTRACT COMPETENCY INFORMATION OF EACH BUSINESS ENTITY AS STRUCTURED DATA ACCORDING TO PREDEFINED TREE-LIKE SCHEMA DEFINITION — S4

CALCULATE DEGREE OF SIMILARITY BETWEEN COMPETENCIES OF BUSINESS ENTITY BEING EVALUATED AND EACH BUSINESS ENTITY LINKED THERETO — S5

FUSE DEGREES OF SIMILARITY FOR LINKS FOR ALL BUSINESS ENTITIES LINKED TO BUSINESS ENTITY BEING EVALUATED AND PRESENT RESULT AS DEGREE OF TRUST RELIABILITY FOR CAPABILITIES OF BUSINESS ENTITY BEING EVALUATED — S6

END

Europäisches
Patentamt

European
Patent Office

Office européen
des brevets

# EUROPEAN SEARCH REPORT

Application Number

EP 20 21 4571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/208669 A1 (RIVETTE KEVIN G [US] ET AL) 6 September 2007 (2007-09-06) * figures 1-7 * | 1-6 | INV. G06Q10/06 |
| X | US 2014/101146 A1 (SCRIFFIGNANO ANTHONY J [US] ET AL) 10 April 2014 (2014-04-10) * paragraph [0012] - paragraph [0026]; figure 2 * | 1-6 | |
| X | US 2017/323358 A1 (PSOTA JAMES RYAN [US] ET AL) 9 November 2017 (2017-11-09) * paragraph [0111] - paragraph [0164] * | 1-6 | |
| X | US 2019/138538 A1 (STOJANOVIC ALEXANDER SASHA [US] ET AL) 9 May 2019 (2019-05-09) * figures 1-3 * | 1-6 | |
| X | CN 109 558 541 A (BEIJING BAIWU TECH CO LTD) 2 April 2019 (2019-04-02) * page 1 - page 8 * | 1-6 | |

TECHNICAL FIELDS
SEARCHED        (IPC)

G06Q

The present search report has been drawn up for all claims

| Place of search | Date of completion of the search | Examiner |
|---|---|---|
| Munich | 19 February 2021 | Krafft, Gerald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

EP 3 852 034 A1

## ANNEX TO THE EUROPEAN SEARCH REPORT
## ON EUROPEAN PATENT APPLICATION NO.

EP 20 21 4571

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2021

| Patent document cited in search report | | Publication date | Patent family member(s) | | Publication date |
|---|---|---|---|---|---|
| US 2007208669 | A1 | 06-09-2007 | US | 6963920 B1 | 08-11-2005 |
| | | | US | 2005256965 A1 | 17-11-2005 |
| | | | US | 2007078886 A1 | 05-04-2007 |
| | | | US | 2007208669 A1 | 06-09-2007 |
| US 2014101146 | A1 | 10-04-2014 | US | 2014101146 A1 | 10-04-2014 |
| | | | WO | 2014036441 A2 | 06-03-2014 |
| US 2017323358 | A1 | 09-11-2017 | CA | 2742395 A1 | 22-05-2009 |
| | | | CA | 3026347 A1 | 22-05-2009 |
| | | | CN | 101918961 A | 15-12-2010 |
| | | | CN | 105046497 A | 11-11-2015 |
| | | | EP | 2212839 A1 | 04-08-2010 |
| | | | US | 2009144070 A1 | 04-06-2009 |
| | | | US | 2013268403 A1 | 10-10-2013 |
| | | | US | 2014095353 A1 | 03-04-2014 |
| | | | US | 2017323358 A1 | 09-11-2017 |
| | | | WO | 2009065029 A1 | 22-05-2009 |
| US 2019138538 | A1 | 09-05-2019 | CN | 106687952 A | 17-05-2017 |
| | | | EP | 3198482 A1 | 02-08-2017 |
| | | | JP | 6568935 B2 | 28-08-2019 |
| | | | JP | 2017536601 A | 07-12-2017 |
| | | | US | 2016092557 A1 | 31-03-2016 |
| | | | US | 2019138538 A1 | 09-05-2019 |
| | | | WO | 2016049437 A1 | 31-03-2016 |
| CN 109558541 | A | 02-04-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015026388 A
- WO 2016021522 A
- JP 2019057068 A

**Non-patent literature cited in the description**

- **A. JOSANG.** Artificial Reasoning with Subjective Logic. *Proceedings of the Second Australian Workshop on Commonsense Reasoning,* 1997
- **M. SIEGRIST ; G. CVETKOVICH ; C. ROTH.** Salient Value Similarity, Social Trust, and Risk/Benefit Perception. *Risk Analysis,* 2000